# EUROPEAN PATENT SPECIFICATION

(11) **EP 3 505 568 B1**
(45) Date of publication and mention of the grant of the patent: **26.03.2025**
(21) Application number: 17843678.8
(22) Date of filing: 24.08.2017
(51) Int. Cl.: C08L 71/03, C08G 65/24, C08G 59/24, C08G 65/333

(54) **IONIC COMPOSITION AND CROSSLINKED PRODUCT**
IONISCHE ZUSAMMENSETZUNG UND VERNETZTES PRODUKT
COMPOSITION IONIQUE ET PRODUIT RÉTICULÉ

(30) Priority: 25.08.2016 JP 2016164578
(43) Date of publication of application: 03.07.2019
(73) Proprietor: Zeon Corporation, Tokyo 100-8246 (JP)
(72) Inventor: OTA, Keisuke, Tokyo 100-8246 (JP); HAYANO, Shigetaka, Tokyo 100-8246 (JP)
(74) Representative: Kraus & Lederer PartGmbB
(86) International application number: PCT/JP2017/030290
(87) International publication number: WO 2018/038202

(56) References cited:
- EP-A1- 2 692 772
- EP-A1- 2 902 430
- EP-A1- 3 584 299
- WO-A1-2014/148598
- JP-A- 2008 054 446
- JP-A- 2011 241 311
- JP-A- 2011 241 311
- JP-A- 2012 167 251
- US-A1- 2006 047 054
- US-A1- 2014 018 507

## Description

### TECHNICAL FIELD

The present invention relates to an ionic composition comprising an ionic liquid, and more particularly, to an ionic composition having a very low vapor pressure, low flammability, and excellent low-temperature properties.

### BACKGROUND ART

In general, industrial processes using organic solvents are widely used in the chemical industry, but since organic solvents are flammable, the use of organic solvents is a problem that needs to be solved from the viewpoint of safety.

Further, the development of processes based on an aqueous solution as a liquid other than an organic solvent has been studied. However, water generally damages electronic devices and causes metals such as iron to corrode, and hence process development thereof is inevitably limited. Therefore, the use of non-volatile ionic liquids has been studied as a third solvent instead of these (see, for example, Non-Patent Document 1). For example, by using an ionic liquid as a medium instead of an organic solvent, there would be expected to be an improvement in the problem of reduction in the amount of liquid over time and ignition due to volatilization of the organic solvent, and the risk of damage and corrosion caused by water could be avoided.

However, since many ionic liquids are liquid at ordinary temperature but solidify at low temperatures, their low-temperature properties are not sufficient. Therefore, a problem thereof is that when applied to industrial processes, the environmental conditions under which ionic liquids can be used are limited (e.g., cannot be used at low temperatures). As a method of lowering the melting point of an ionic liquid, a method such as adding an organic solvent to the ionic liquid may be considered, but adding a volatile organic solvent may cause new problems to arise, such as an insufficient suppression effect on flammability.

Under such circumstances, when using an ionic liquid as a substitute for organic solvents in general chemical industrial processes, there is a need for very low vapor pressure, low flammability, and better low-temperature properties.

### RELATED ART

### NON-PATENT DOCUMENTS

Non-Patent Document 1: Welton, T. Chem. Rev., 1999, 99 (8), pp 2071-2084. US2014/018507A1 discloses a polyether compound containing oxirane monomer units in an average number per molecule of 5 to 200, wherein the polyether compound has cationic groups and cross-linkable groups in the oxirane monomer units.

### SUMMARY OF THE INVENTION

### PROBLEM TO BE SOLVED BY THE INVENTION

The present invention was completed in view of such a situation. An object of the present invention is to provide an ionic liquid-containing ionic composition having a very low vapor pressure, low flammability, and excellent low-temperature properties.

### MEANS FOR SOLVING THE PROBLEM

The present inventors carried out extensive studies to achieve the above object. The present inventors consequently found that an ionic composition obtained by blending a polyether compound having a cationic group as described in claim 1 in an ionic liquid has a very low vapor pressure, low flammability, and excellent low-temperature properties. The present invention was completed based on the above findings.

That is, the present invention provides an ionic composition as defined in the appended claims comprising an ionic liquid and a polyether compound having a cationic group.

In the ionic composition of the present invention, the polyether compound having a cationic group is composed of a monomer unit represented by the following general formula (1).

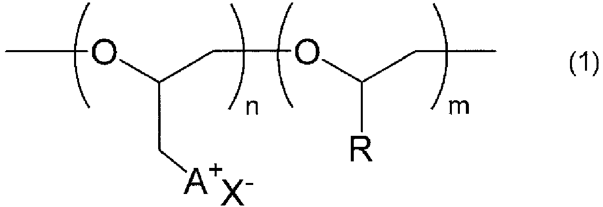

In the above general formula (1), A⁺ represents a cationic group or a cationic group-containing group, X⁻ represents any counter anion, R represents a non-ionic group, "n" is an integer of 1 or more, and "m" is an integer of 0 or more.

In the ionic composition of the present invention, the cationic group is preferably a cationic group in which a nitrogen atom forms an onium cation structure.

In the ionic composition of the present invention, the cationic group is preferably a cationic group in which a nitrogen atom in a nitrogen atom-containing aromatic heterocycle forms an onium cation structure.

In the ionic composition of the present invention, the polyether compound having a cationic group preferably has a number average molecular weight (Mn) of 750 to 2,000,000.

In the ionic composition of the present invention, the ionic liquid preferably has an ion containing a cationic nitrogen atom as a cation.

In the ionic composition of the present invention, the ionic liquid has a molecular weight of 100 to 700.

In the ionic composition of the present invention, a content of the polyether compound having a cationic group is 3 to 400 parts by weight with respect to 100 parts by weight of the ionic liquid.

In the ionic composition of the present invention, the polyether compound having a cationic group preferably further has a cross-linkable group.

Further, the present invention provides a cross-linkable composition comprising the above-mentioned ionic composition of the present invention and a cross-linking agent.

In addition, the present invention provides a cross-linked product obtained by cross-linking the above-mentioned cross-linkable composition of the present invention.

### EFFECTS OF INVENTION

The present invention can provide an ionic liquid-containing ionic composition having a very low vapor pressure, low flammability, and excellent low-temperature properties.

### DESCRIPTION OF EMBODIMENTS

### <Ionic Composition>

The ionic composition of the present invention is as defined in the appended claims and is an ionic composition comprising an ionic liquid and a polyether compound having a cationic group.

### <Ionic Liquid>

In the present invention, the ionic liquid may be an organic salt compound having a melting point of 150°C or less, and is preferably an organic salt compound having a melting point of 100°C or less, more preferably an organic salt compound having a melting point of 80°C or less, and even more preferably an organic salt compound having a melting point of room temperature (25°C) or less. The ionic liquid is an organic salt compound composed of a cation and an anion. More preferably, the ionic liquid is an organic salt compound having, as the cation, an organic molecule that has only one positive charge, and a counter anion having only one negative charge. The ionic liquid may also be referred to as an ionic-property liquid or an ordinary temperature molten salt.

The ionic liquid used in the present invention preferably has a viscosity at 25°C in the range of 10 to 1000 mPa·s, and more preferably in the range of 10 to 500 mPa·s.

Further, the ionic liquid used in the present invention is an ionic liquid having a molecular weight (molecular weight combining the cation and anion) in the range of 100 to 700, and an ionic liquid having a molecular weight in the range of 120 to 500 is more preferable.

Specific examples of the cation forming the ionic liquid include, but are not limited to: an ammonium ion; a monosubstituted ammonium ion containing a cationic nitrogen atom, such as methylammonium ion, butylammonium ion, cyclohexylammonium ion, anilinium ion, benzylammonium ion, and ethanolammonium ion; a disubstituted ammonium ion containing a cationic nitrogen atom, such as dimethylammonium ion, diethylammonium ion, dibutylammonium ion, and nonylphenylammonium ion; a trisubstituted ammonium ion containing a cationic nitrogen atom, such as trimethylammonium ion, triethylammonium ion, n-butyldimethylammonium ion, stearyldimethylammonium ion, tributylammonium ion, trivinylammonium ion, triethanolammonium ion, N,N-dimethylethanolammonium ion, and tri(2-ethoxyethyl)ammonium ion; a tetrasubstituted ammonium ion containing a cationic nitrogen atom, such as tetramethylammonium ion, trimethylethylammonium ion, trimethylpropylammonium ion, trimethylbutylammonium ion, trimethylpentylammonium ion, trimethylhexylammonium ion, trimethylheptylammonium ion, trimethyloctylammonium ion, trimethyldecyl ammonium ion, and trimethyldodecyl ammonium ion; a heterocyclic ion containing a cationic nitrogen atom, such as piperidinium ion, 1-methylpyrrolidinium ion, 1-butyl-1-methylpyrrolidinium ion, imidazolium ion, 1-methylimidazolium ion, 1-ethylimidazolium ion, 1-ethyl-3-methylimidazolium ion, 1-butyl-3-methylimidazolium ion, benzimidazolium ion, pyrrolium ion, 1-methylpyrrolium ion, oxazolium ion, benzoxazolium ion, pyrazolium ion, isoxazolium ion, pyridinium ion, 2,6-dimethylpyridinium ion, N-butylpyridinium ion, pyrazinium ion, pyrimidinium ion, pyridazinium ion, triazinium ion, N,N-dimethylanilinium ion, quinolinium ion, isoquinolinium ion, indolinium ion, quinoxalinium ion, and isoquinoxalium ion; an ion including a cationic phosphorus atom, such as tributyldodecaphosphonium ion and tetrabutylphosphonium ion; an ion including a cationic sulfur atom, such as triphenylsulfonium ion and tributylsulfonium ion; and the like. Among these, an ion containing a cationic nitrogen atom is preferable, a heterocyclic ion containing a cationic nitrogen atom is more preferable, and an ion containing a pyrrolidinium ring, an ion containing an imidazolium ring, and an ion containing a pyridinium ring are particularly preferable.

Specific examples of the anion forming the ionic liquid include, but are not limited to, halide ions such as Cl⁻, Br⁻, and I⁻, sulfonyl imidate ions such as (FSO₂)₂N⁻, (CF₃SO₂)₂N⁻, and (CF₃CF₂SO₂)₂N⁻, OH⁻, SCN⁻, BF₄⁻, PF₆⁻, ClO₄⁻, CH₃SO₃⁻, CF₃SO₃⁻, CF₃COO⁻, PhCOO⁻, and the like. Among these, (CF₃SO₂)₂N⁻, BF₄⁻, PF₆⁻, ClO₄⁻, CF₃SO₃⁻, and CF₃COO⁻ are preferable, (CF₃SO₂)₂N⁻ and BF₄⁻ are more preferable, and (CF₃SO₂)₂N⁻ is particularly preferable.

As the ionic liquid used in the present invention, all of the cations and anions may be composed of the same ionic species, or two or more ionic species may be mixed as one or both of the cation and the anion. More specifically, the ionic liquid may be a single ionic liquid or a mixture of two or more ionic liquids.

Specific examples of the ionic liquid used in the present invention include 1-ethyl-3-methylimidazolium bis(trifluoromethanesulfonyl)imide, 1-butyl-3-methylimidazolium bis(trifluoromethanesulfonyl)imide, 1-ethyl-3-methylimidazolium tetrafluoroborate, 1-ethyl-3-methylimidazolium hexafluorophosphate, 1-butyl-1-methylpyrrolidinium bis(trifluoromethanesulfonyl)imide, N-butylpyridinium bis(trifluoromethanesulfonyl)imide, tributyldodecaphosphonium bis(trifluoromethanesulfonyl)imide, and the like.

### <Polyether Compound Having Cationic Group>

The polyether compound having a cationic group used in the present invention is a polyether compound that includes an oxirane monomer unit, which is a unit obtained by ring opening polymerization of an oxirane structure moiety of a compound containing an oxirane structure, and that has a cationic group in its molecule.

As a result of extensive studies by the present inventors to improve low-temperature properties in ionic compositions containing an ionic liquid, the present inventors found that (1) blending a polyether compound having a cationic group to the above-mentioned ionic liquid enables the melting point of the ionic liquid to be lowered due to the effect of blending the polyether compound having a cationic group, and furthermore, (2) combining with the ionic liquid also allows the glass transition point of the polyether compound having a cationic group to be lowered, and as a result (3) the ionic composition to be obtained has excellent low-temperature properties. Based on these findings, the present inventors completed the present invention. More specifically, the ionic composition of the present invention comprises an ionic liquid and a polyether compound having a cationic group, and as a result the vapor pressure of the ionic liquid and the polyether compound having a cationic group is very low, and thus the ionic composition has the following properties: the flammability is suppressed, and also the melting point of the ionic liquid and the glass transition point of the polyether compound having a cationic group can be lowered, thereby ensuring that the low-temperature properties are excellent. In the present invention, the expression "low-temperature properties are excellent" refers to a case in which the melting point of the ionic liquid in the ionic composition is lower than the specific melting point and that the glass transition point of the polyether compound having a cationic group is lower than the specific glass transition point. For example, even if the melting point of the ionic liquid in the ionic composition is observed to be around 0 to 10°C, which is the refrigeration temperature, if the melting point is lower than the specific melting point of that ionic liquid, the ionic composition can be deemed to have excellent low-temperature properties.

Specific examples of the oxirane monomer unit forming the polyether compound having a cationic group used in the present invention include an alkylene oxide monomer unit such as an ethylene oxide unit, a propylene oxide unit, and 1,2-butylene oxide unit; an epihalohydrin monomer unit such as an epichlorohydrin unit, an epibromohydrin unit, and an epiiodohydrin unit; an alkenyl group-containing oxirane monomer unit such as an allyl glycidyl ether unit; an aromatic ether group-containing oxirane monomer unit such as a phenyl glycidyl ether unit; a (meth)acryloyl group-containing oxirane monomer unit such as a glycidyl acrylate unit and a glycidyl methacrylate unit; and the like. However, the oxirane monomer unit is not limited to these examples.

The polyether compound having a cationic group used in the present invention may contain two or more oxirane monomer units. In this case, the distribution pattern of the plurality of repeating units is not particularly limited and is preferably a random distribution.

Among the above-mentioned monomer units, the epihalohydrin monomer unit, the alkenyl group-containing oxirane monomer unit, and the (meth)acryloyl group-containing oxirane monomer unit are oxirane monomer units having a cross-linkable group. Including such an oxirane monomer unit having a cross-linkable group enables a cross-linkable group in addition to a cationic group to be introduced into the polyether compound having a cationic group used in the present invention to make the polyether compound having a cationic group cross-linkable. In particular, when the polyether compound having a cationic group used in the present invention has a cross-linkable group, blending a cross-linking agent can change the ionic composition of the present invention into a cross-linkable composition that can be cross-linked. The cross-linked product obtained by cross-linking this cross-linkable composition includes a cross-linked structure, and hence for example when molded into a predetermined shape, the cross-linked product has better shape retention. As a result, vapor pressure is very low, flammability is suppressed, low-temperature properties are excellent, and the occurrence of liquid leakage can be effectively suppressed. The oxirane monomer unit having a cross-linkable group may be any monomer unit having a cross-linkable group, and is not particularly limited to those described above. In addition, in the oxirane monomer unit composing the polyether compound having a cationic group, the cationic group and the cross-linkable group may be included as the same repeating unit or as separate repeating units. However, it is preferable for those units to be included as separate repeating units.

A proportion of oxirane monomer units having a cross-linkable group in the polyether compound having a cationic group used in the present invention is not limited to a particular proportion. However, the proportion is preferably 99 mol% or less, more preferably 50 mol% or less, and even more preferably 20 mol% or less, based on all the oxirane monomer units composing the polyether compound having a cationic group. A lower limit of the proportion of the oxirane monomer units having a cross-linkable group is not limited to a particular value. However, from the perspective of producing a cross-linkable composition capable of cross-linking the ionic composition of the present invention and enabling a cross-linked product obtained by cross-linking such cross-linkable composition to exhibit even better shape retention, the proportion is preferably 1 mol% or more.

Further, the polyether compound having a cationic group used in the present invention contains an oxirane monomer unit having a cationic group as at least a part of the oxirane monomer units.

The cationic group which can be included in the polyether compound having a cationic group used in the present invention is not limited to a particular cationic group. However, from the viewpoint of enabling the ionic composition of the present invention to exhibit even better low-temperature properties, the cationic group is preferably a cationic group in which atoms from group 15 or 16 of the periodic table have formed an onium cation structure, more preferably a cationic group in which nitrogen atoms have formed an onium cation structure, further preferably a cationic group in which nitrogen atoms in a nitrogen atom-containing aromatic heterocycle have formed an onium cation structure, particularly preferably a cationic group in which nitrogen atoms in an imidazolium ring have formed an onium cation structure.

Specific examples of the cationic group include an ammonium group such as an ammonium group, a methylammonium group, a butylammonium group, a cyclohexyl ammonium group, an anilinium group, a benzylammonium group, an ethanolammonium group, a dimethylammonium group, a diethylammonium group, a dibutylammonium group, a nonylphenylammonium group, a trimethylammonium group, a triethylammonium group, a n-butyldimethylammonium group, a n-octyldimethylammonium group, a n-stearyldimethylammonium group, a tributylammonium group, a trivinylammonium group, a triethanolammonium group, an N,N-dimethylethanolammonium group, and a tri(2-ethoxyethyl)ammonium group; a group including a heterocyclic ring having a cationic nitrogen atom such as a piperidinium group, a 1-pyrrolidinium group, a 1-methylpyrrolidinium group, an imidazolium group, a 1-methylimidazolium group, a 1-ethylimidazolium group, a benzimidazolium group, a pyrrolium group, a 1-methylpyrrolium group, an oxazolium group, a benzoxazolium group, a benzisoxazolium group, a pyrazolium group, an isoxazolium group, a pyridinium group, a 2,6-dimethylpyridinium group, a pyrazinium group, a pyrimidinium group, a pyridazinium group, a triazinium group, an N,N-dimethylanilinium group, a quinolinium group, an isoquinolinium group, an indolinium group, an isoindolium group, a quinoxalinium group, an isoquinoxalinium group, and a thiazolium group; a group including a cationic phosphorus atom such as a triphenylphosphonium salt and a tributylphosphonium group; and the like. However, it is not limited to these examples. Among these examples, a group including a heterocyclic ring having a cationic nitrogen atom such as a 1-methylpyrrolidinium group, an imidazolium group, a 1-methylimidazolium group, a 1-ethylimidazolium group, and a benzimidazolium group is preferred.

Although the cationic group generally has a counter anion, the counter anion is not limited to a particular one and examples thereof include a halide ion such as Cl⁻, Br-, and I⁻, a sulfonylimide ion such as (FSO₂)₂N⁻, (CF₃SO₂)₂N⁻, and (CF₃CF₂SO₂)₂N⁻, and further, OH⁻, SCN⁻, BF₄⁻, PF₆⁻, ClO₄⁻, CH₃SO₃⁻, CF₃SO₃⁻, CF₃COO⁻, PhCOO⁻, and the like. These counter anions may be appropriately selected according to properties of the ionic composition to be obtained.

In the polyether compound having a cationic group used in the present invention, among the oxirane monomer units composing the polyether compound, at least a part of the oxirane monomer units may be an oxirane monomer unit having a cationic group and, for example, the oxirane monomer units composing the polyether compound may all have a cationic group or may be a mixture of the oxirane monomer units having a cationic group and the oxirane monomer units not having a cationic group. In the polyether compound having a cationic group used in the present invention, a proportion of oxirane monomer units having a cationic group is not limited to a particular proportion. However, the proportion is preferably 1 mol% or more, more preferably 10 mol% or more, and even more preferably 20 mol% or more, based on all the oxirane monomer units composing the polyether compound having a cationic group. Setting the proportion of the oxirane monomer units having a cationic group to be within the above-mentioned range enables the ionic composition to be obtained to exhibit even better low-temperature properties. An upper limit of the proportion of the oxirane monomer units having a cationic group is not limited to a particular value. However, from the perspective of producing a cross-linkable composition capable of cross-linking the ionic composition of the present invention and enabling a cross-linked product obtained by cross-linking such cross-linkable composition to exhibit even better shape retention, the proportion is preferably 99 mol% or less.

The structure of the polyether compound having a cationic group used in the present invention is a structure composed of a monomer unit represented by the following general formula (1) .

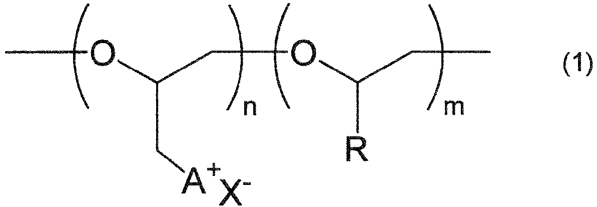

In the above general formula (1), A⁺ represents a cationic group or a cationic group-containing group, X⁻ represents any counter anion, R represents a non-ionic group, "n" is an integer of 1 or more, and "m" is an integer of 0 or more.

In the above general formula (1), A⁺ represents a cationic group or a cationic group-containing group. Specific examples of the cationic group are as described above, and specific examples of the cationic group-containing group include a group containing the cationic group as described above.

In the above general formula (1), X⁻ represents any counter anion. Specific examples of the counter anion are as described above.

In the above general formula (1), R represents a non-ionic group. R is not particularly limited as long as it is a non-ionic group, and it may include a cross-linkable group. Examples of R include a hydrogen atom; an alkyl group having 1 to 10 carbon atoms such as a methyl group, an ethyl group, a n-propyl group, an isopropyl group, a n-butyl group, an isobutyl group, and a t-butyl group; an alkenyl group having 2 to 10 carbon atoms such as a vinyl group, an allyl group, and a propenyl group; an alkynyl group having 2 to 10 carbon atoms such as an ethynyl group and a propynyl group; a cycloalkyl group having 3 to 20 carbon atoms such as a cyclopropyl group, a cyclobutyl group, a cyclopentyl group, and a cyclohexyl group; an aryl group having 6 to 20 carbon atoms such as a phenyl group, a 1-naphthyl group, and a 2-naphthyl group; and the like.

Among these examples, an alkyl group having 1 to 10 carbon atoms, an alkenyl group having 2 to 10 carbon atoms, an alkynyl group having 2 to 10 carbon atoms, a cycloalkyl group having 3 to 20 carbon atoms, and an aryl group having 6 to 20 carbon atoms may have a substituent at any position.

Examples of the substituent include an alkyl group having 1 to 6 carbon atoms such as a methyl group and an ethyl group; an alkoxy group having 1 to 6 carbon atoms such as a methoxy group, an ethoxy group, and an isopropoxy group; an alkenyloxy group having 2 to 6 carbon atoms such as a vinyloxy group and an allyloxy group; an aryl group which may have a substituent such as a phenyl group, a 4-methylphenyl group, a 2-chlorophenyl group, and a 3-methoxyphenyl group; a halogen atom such as a fluorine atom, a chlorine atom, and a bromine atom; an alkylcarbonyl group having 1 to 6 carbon atoms such as a methylcarbonyl group and an ethylcarbonyl group; a (meth)acryloyloxy group such as an acryloyloxy group and a methacryloyloxy group; and the like.

In the above general formula (1), n may be an integer of 1 or more, and m may be an integer of 0 or more. However, n is preferably an integer of 1 to 100,000, more preferably an integer of 2 to 50,000, even more preferably an integer of 5 to 5,000, and particularly preferably an integer of 5 to 900. Further, m is preferably an integer of 0 to 100,000, more preferably an integer of 2 to 50,000, even more preferably an integer of 5 to 5,000, and particularly preferably an integer of 5 to 100. In addition, n+m is preferably an integer of 1 to 200,000, more preferably an integer of 4 to 100,000, even more preferably an integer of 10 to 10,000, and particularly preferably an integer of 10 to 1,000.

When the structure of the polyether compound having a cationic group used in the present invention is composed of a monomer unit represented by the above general formula (1), a polymer chain end is not limited to a particular group and may be any group. Examples of the polymer chain end include the above-described cationic groups, a hydroxy group, a hydrogen atom, and the like.

The number average molecular weight (Mn) of the polyether compound having a cationic group used in the present invention is not particularly limited, but is preferably 750 to 2,000,000, more preferably 1000 to 1,000,000, and more preferably 1500 to 500,000. The molecular weight distribution (Mw/Mw) of the polyether compound having a cationic group used in the present invention is preferably 1.0 to 3.0, and more preferably 1.0 to 2.0. The number average molecular weight and the molecular weight distribution of the polyether compound having a cationic group can be determined by the methods described in EXAMPLES below. It is also noted that the molecular weight distribution of the polyether compound having a cationic group can be considered as being a value that has not changed from the molecular weight distribution of the base polymer (polyether compound not having a cationic group) before the introduction of a cationic group.

The chain structure of the polyether compound having a cationic group used in the present invention is not particularly limited, and may be a straight chain or a chain structure having a branch such as a graft chain and a radial chain.

Although a method for synthesizing the polyether compound having a cationic group used in the present invention is not limited to a particular method, any method for synthesizing that can produce a target polyether compound can be employed. As an example of the synthesis method, first, a base polymer (a polyether compound not having a cationic group) is obtained by the following method (A) or (B).
(A) A method for producing a base polymer, which is disclosed in Japanese Patent Laid-Open No. 2010-53217, by ring-opening polymerization of a monomer containing an oxirane monomer including at least an epihalohydrin such as epichlorohydrin, epibromohydrin, or epiiodohydrin in the presence of a catalyst composed of an onium salt of a compound containing an atom from group 15 or 16 of the periodic table and trialkylaluminum in which the contained alkyl groups are all straight-chain alkyl groups.
(B) A method for producing a base polymer, which is disclosed in Japanese Patent Publication No. 46-27534, by ring-opening polymerization of a monomer containing an oxirane monomer including at least an epihalohydrin such as epichlorohydrin, epibromohydrin, or epiiodohydrin in the presence of a catalyst prepared by reacting phosphoric acid and triethylamine with triisobutylaluminum.

The polyether compound having a cationic group can be obtained by reacting an amine compound such as an imidazole compound with the base polymer obtained by the above-mentioned method (A) or (B) to convert a halogen group composing the epihalohydrin monomer unit of the base polymer into an onium halide group, and then subjecting a halide ion composing the onium halide group to an anion-exchange reaction, as necessary.

The content of the polyether compound having a cationic group is 3 to 400 parts by weight, with respect to 100 parts by weight of the ionic liquid. If the content of the polyether compound having a cationic group is too small, the action of lowering the melting point of the ionic liquid becomes small, and an improvement effect in the low-temperature properties of the ionic composition to be obtained may be reduced. On the other hand, if the content of the polyether compound having a cationic group is too high, the action of lowering the glass transition point of the polyether compound having a cationic group becomes small, and an improvement effect in the low-temperature properties of the ionic composition to be obtained may be reduced.

### <Cross-Linkable Composition>

The cross-linkable composition of the present invention is a composition obtained by using, as the polyether compound having a cationic group composing the above ionic composition, one having a cross-linkable group, and blending a cross-linking agent in the cross-linkable composition.

The cross-linking agent used in the present invention may be appropriately selected in accordance with the kind of the cross-linkable group of the polyether compound having a cationic group and the like. Specific examples of the cross-linking agent include: sulfur such as powdered sulfur, precipitated sulfur, colloidal sulfur, insoluble sulfur, and highly dispersible sulfur; sulfur-containing compounds, such as sulfur monochloride, sulfur dichloride, morpholine disulfide, alkylphenol disulfide, dibenzothiazyl disulfide, N,N'-dithio-bis(hexahydro-2H-azenopine-2), phosphorus-containing polysulfide, and polymer polysulfide; organic peroxides such as dicumyl peroxide and ditertiarybutyl peroxide; quinone dioxime such as p-quinonedioxime and p,p'-dibenzoylquinonedioxime; organic polyvalent amine compounds such as triethylenetetramine, hexamethylenediamine carbamate, and 4,4'-methylenebis-o-chloroaniline; triazine compounds such as s-triazine-2,4,6-trithiol; alkylphenol resins having a methylol group; various ultraviolet cross-linking agents such as alkylphenone type photopolymerization initiators like 2-methyl-1-(4-methylthiophenyl)-2-morpholinopropan-1-one and 2-(dimethylamino)-2-[(4-methylphenyl)methyl]-1-[4-(4-morpholinyl)phenyl]-1-butanone; and the like. For example, when the cross-linkable group of the polyether compound having a cationic group is an ethylenic carbon-carbon unsaturated bond-containing group, among the above cross-linking agents, it is preferable to use a cross-linking agent selected from sulfur, a sulfur-containing compound, an organic peroxide, and an ultraviolet cross-linking agent, and it is particularly preferable to use an ultraviolet cross-linking agent. These cross-linking agents can be used singly or in combination of two or more. The blended proportion of the cross-linking agent is not particularly limited, but is preferably 0.1 to 10 parts by weight, more preferably 0.2 to 7 parts by weight, and even more preferably 0.3 to 5 parts by weight, based on 100 parts by weight of the polyether compound having a cationic group. Setting the blending amount of the cross-linking agent to within the above range enables shape retention in the case of a cross-linked product to be appropriately increased, while improving specific properties as the ionic composition of the ionic liquid.

### <Method of Producing Ionic Composition and Cross-Linkable Composition>

The ionic composition of the present invention can be obtained by mixing the above-mentioned ionic liquid and polyether compound having a cationic group. Further, the cross-linkable composition of the present invention can be obtained by mixing a cross-linking agent in addition to these. The mixing method is not particularly limited, and a known method can be used without limitation. Further, the mixing may be carried out in a solvent. Examples of the solvent include, but are not particularly limited to, an ether such as tetrahydrofuran and anisole; an ester such as ethyl acetate and ethyl benzoate; a ketone such as acetone, 2-butanone, and acetophenone; an aprotic polar solvent such as acetonitrile, dimethylformamide, dimethylacetamide, dimethylsulfoxide, and N-methylpyrrolidone; a protic polar solvent such as ethanol, methanol, and water; and the like. These solvents may be used singly or can be used as a mixed solvent of two or more.

### <Other Components>

In addition to the ionic liquid, the polyether compound having a cationic group, and the cross-linking agent (in the case of a cross-linkable composition), the ionic composition and cross-linkable composition of the present invention may contain other components. Specific examples of such other components include, but are not limited to, metal salts such as LiPF₆, LiN(SO₂CF₃)₂(LiTFSI), LiN(SO₂F)₂, LiClO₄, LiBF₄, NaPF₆, NaN(SO₂CF₃)₂, NaClO₄, KBF₄, and KI; low molecular weight compounds such as water, methanol, ethanol, acetone, ethylene carbonate, propylene carbonate, vinylene carbonate, and γ-butyrolactone; nano-carbons such as carbon nanotubes and graphene; metal powders such as gold powder, silver powder, and copper powder; metal oxide powders such as zinc oxide powder, silica powder, titanium oxide powder, and alumina powder; metal nitride powders such as boron nitride powder and aluminum nitride powder; and the like.

### <Cross-Linked Product>

The cross-linked product of the present invention can be obtained by cross-linking the above-mentioned cross-linkable composition of the present invention.

The method for cross-linking the cross-linkable composition of the present invention may be selected according to, for example, the type of cross-linking agent to be used. Examples of the method include, but are not particularly limited to, cross-linking by heating or cross-linking using ultraviolet ray irradiation. In the case of cross-linking by heating, the cross-linking temperature is not particularly limited, but is preferably 130 to 200°C, and more preferably 140 to 200°C. The cross-linking time is also not particularly limited, and it is selected, for example, in the range of 1 minute to 5 hours. The heating method may be appropriately selected from among methods such as press heating, oven heating, steam heating, hot air heating, microwave heating, and the like. In the case of performing cross-linking using ultraviolet ray irradiation, ultraviolet rays may be irradiated onto the cross-linkable composition by a usual method using a light source such as a high pressure mercury lamp, a metal halide lamp, and a mercury-xenon lamp.

The ionic composition of the present invention comprises an ionic liquid and a polyether compound having a cationic group, as defined in the appended claims. As a result, vapor pressure is very low, flammability is suppressed, and yet, the low-temperature properties are excellent.

The cross-linked product of the ionic composition of the present invention is obtained by cross-linking a cross-linkable composition containing an ionic liquid, a polyether compound having a cationic group, and a cross-linking agent. Therefore, due to its very low vapor pressure, flammability is suppressed. Moreover, the cross-linked product has excellent low-temperature properties, as well as excellent shape retention for example when molded into a predetermined shape, and leakage is effectively suppressed.

Therefore, the ionic composition and the cross-linked product of the present invention can be suitably used for solvent applications and the like in general chemical industry processes.

### EXAMPLES

Hereinafter, the present invention will be described with reference to more detailed examples. However, the present invention is not limited to these examples. Note that the term "part(s)" and the symbol "%" mentioned below are based on weight unless otherwise noted. Further, tests and evaluations were conducted in accordance with the description below.

### [Number Average Molecular Weight (Mn) and Molecular Weight Distribution (Mw/Mn)]

(1) The number average molecular weight (Mn) and the molecular weight distribution (Mw/Mn) of a base polymer (polyether compound not having a cationic group) were measured as polystyrene equivalent values by gel permeation chromatography (GPC) with tetrahydrofuran as a solvent. HLC-8320 (manufactured by Tosoh Corporation) was used as the measuring instrument, in which four columns of TSKgel SuperMultipore HZ-H (manufactured by Tosoh Corporation) were connected in series, and the differential refractometer RI-8320 (manufactured by Tosoh Corporation) was used as the detector.
(2) The number average molecular weight (Mn) of the polyether compound having a cationic group was determined as follows. First, the average molecular weight of all the repeating units composing the polyether compound having a cationic group was determined from the average molecular weight of the repeating units of a base polymer (polyether compound not having a cationic group), the average molecular weight of the oxirane monomer units having a cationic group, and the content rate of the oxirane monomer units having a cationic group determined by (3) below. Then, the number of repeating units of the base polymer (polyether compound not having a cationic group) was multiplied by the average molecular weight of the all repeating units composing the polyether compound having a cationic group, and the resultant value was determined as the number average molecular weight of the polyether compound having a cationic group.
(3) The structure of the polyether compound having a cationic group and the content rate of the oxirane monomer unit having a cationic group in the polyether compound having a cationic group were measured as follows using a nuclear magnetic resonator (NMR). First, 30 mg of a sample polyether compound having a cationic group was added to 1.0 mL of deuterated chloroform or deuterated dimethylsulfoxide, which was shaken for 1 hour so that the sample polyether compound was dissolved uniformly. The resultant solution was then subjected to an NMR measurement to obtain a ¹H-NMR spectrum, and the structure of the polyether compound was determined in accordance with a usual method.

Further, the content rate of the oxirane monomer unit having a cationic group in the polyether compound having a cationic group was calculated by the following method. First, a mole number B1 of all oxirane monomer units was calculated from an integrated value of a proton derived from an oxirane monomer unit as a main chain. Next, a mole number B2 of the oxirane monomer unit having a cationic group was calculated from an integrated value of a proton derived from a cationic group. Then, a rate of B2 relative to B1 (percentage) was determined as the content rate of the oxirane monomer unit having a cationic group in the polyether polymer having a cationic group.

### [Melting Point and Glass Transition Point]

The ionic composition and the cross-linked product were cooled and heated by a differential scanning calorimeter (DSC) at a rate of 5°C/min between -80°C and 100°C. In the Examples, the point at which the heat of fusion was at its greatest was taken as the melting point. An X-DSC7000 (manufactured by Hitachi High-Tech Science Corporation) was used as the measuring instrument.

### [Shape Retention]

Shape retention was evaluated by allowing the cross-linked product to stand for 24 hours in a 23°C, 40% humidity environment, and checking whether the ionic liquid had bled out by its own weight.

### [Production Example 1]

### (Living anion copolymerization of epichlorohydrin and glycidyl methacrylate)

To a glass reactor vessel purged with argon and equipped with a stirrer, 0.032 g of tetranormalbutylammonium bromide and 5 ml of toluene were added and then cooled to 0°C. Next, 0.029 g of triethylaluminum (2.5 equivalents based on tetranormalbutylammonium bromide) dissolved in 0.25 ml of normal hexane was added to allow a reaction to proceed for 15 minutes to produce a catalyst composition. To the resultant catalyst composition, 9.5 g of epichlorohydrin and 0.5 g of glycidyl methacrylate were added to carry out a polymerization reaction at 0°C. After the polymerization reaction was initiated, the viscosity of the solution gradually increased. After the reaction proceeded for 1 hour, a small amount of 2-propanol was added to the polymerization reaction solution to stop the reaction. Next, the resultant polymerization reaction solution was diluted with toluene and then poured into 2-propanol to produce 8.3 g of a white rubber-like substance. The obtained rubber-like substance had a number average molecular weight (Mn) determined by GPC measurement of 57,000 and a molecular weight distribution of 1.58. Further, ¹H-NMR measurement was performed on the obtained rubber-like substance, from which it was confirmed that the rubber-like substance contained 97.0 mol% of an epichlorohydrin unit and 3.0 mol% of a glycidyl methacrylate unit. Based on the above, it can be deemed that the obtained rubber-like substance was a polyether compound A composed of epichlorohydrin units and glycidyl methacrylate units (composed of 606 units, on average 588 epichlorohydrin units and 18 glycidyl methacrylate units) and having a bromomethyl group at the polymerization-initiating end and a hydroxyl group at the polymerization-terminating end).

### [Production Example 2]

### (Quaternization of epichlorohydrin unit in polyether compound A with 1-methylimidazole)

To a glass reactor vessel purged with argon and equipped with a stirrer, 8.0 g of polyether compound A obtained in Production Example 1, 22.0 g of 1-methylimidazole, and 16.0 g of N,N-dimethylformamide were added, and heated to 80°C. After the reaction proceeded at 80°C for 144 hours, the solution was cooled to room temperature to stop the reaction. A portion of the obtained reaction solution was extracted, and dried under reduced pressure at 50°C for 120 hours, which eventually obtained 15.0 g of a reddish brown resin-like substance. This resin-like substance was subjected to ¹H-NMR measurement and elemental analysis, and was identified to be a polyether compound B having 1-methylimidazolium halide groups in which the chloro group of all of the epichlorohydrin units and the bromo group of all of the bromomethyl groups at the polymerization-initiating end of the polyether compound A obtained in Production Example 1 of the starting material were substituted with a 1-methylimidazolium chloride group, and a 1-methylimidazolium bromide group, respectively. The obtained polyether compound B had a number average molecular weight (Mn) of 108,000.

### [Production Example 3]

### (Anion exchange of polyether compound B having 1-methylimidazolium halide groups with lithium bis(trifluoromethanesulfonyl)imide)

To a glass reactor vessel equipped with a stirrer, 300 ml of distilled water in which 26.0 g of lithium bis(trifluoromethanesulfonyl)imide had been dissolved was added. Separately from this, 5.0 g of the polyether compound B having 1-methylimidazolium halide groups obtained in Production Example 2 was dissolved in 50 ml of distilled water, and this was added dropwise into the glass reactor and allowed to react for 30 minutes at room temperature. After the reaction, the precipitated rubber-like substance was recovered and dissolved in acetone. The acetone solution was then added dropwise to 300 ml of distilled water, and an inorganic salt was removed by polymer coagulation. The rubber-like substance obtained by the coagulation was dried under reduced pressure at 50°C for 12 hours, which eventually obtained 11.5 g of a pale brown rubber-like substance. The obtained rubber-like substance was subjected to ¹H-NMR measurement and elemental analysis, and was identified to be an imidazolium structure-containing polyether compound C having a bis(trifluoromethanesulfonyl)imide anion as a counter anion in which the chloride ion of the 1-methylimidazolium chloride group in the repeating unit and the bromide ion of the 1-methylimidazolium bromide group of the polymerization-initiating end of the polyether compound B having 1-methylimidazolium halide groups obtained in Production Example 2 as the starting material were all substituted with a bis(trifluoromethanesulfonyl)imide anion. The obtained polyether compound C had a number average molecular weight (Mn) of 259,000.

### [Production Example 4]

### (Anion exchange of polyether compound B having 1-methylimidazolium halide groups with potassium hexafluorophosphate)

To a glass reactor vessel equipped with a stirrer, 50 ml of acetonitrile in which 9.7 g of potassium hexafluorophosphate had been dissolved was added. Separately from this, 5.0 g of the polyether compound B having 1-methylimidazolium halide groups obtained in Production Example 2 was dissolved in 100 ml of methanol, and this was added dropwise into the glass reactor and allowed to react for 30 minutes at room temperature. After the reaction, the precipitated pale brown rubber-like substance was recovered and dissolved in acetone. The acetone solution was then added dropwise to 300 ml of distilled water, and an inorganic salt was removed by polymer coagulation. The rubber-like substance obtained by the coagulation was dried under reduced pressure at 50°C for 12 hours, which eventually obtained 8.0 g of a brown rubber-like substance. The obtained rubber-like substance was subjected to ¹H-NMR measurement and elemental analysis, and was identified to be an imidazolium structure-containing polyether compound D having a hexafluorophosphate anion as a counter anion in which the chloride ion of the 1-methylimidazolium chloride group in the repeating unit and the bromide ion of the 1-methylimidazolium bromide group of the polymerization-initiating end of the polyether compound B having 1-methylimidazolium halide groups obtained in Production Example 2 as the starting material were all substituted with a hexafluorophosphate anion. The obtained polyether compound D had a number average molecular weight (Mn) of 175,000.

### [Production Example 5]

### (Quaternization of epichlorohydrin unit in polyether compound A with 1-methylpyrrolidine)

To a glass reactor vessel purged with argon and equipped with a stirrer, 4.0 g of polyether compound A obtained in the same manner as in Production Example 1, 11.4 g of 1-methylpyrrolidine, and 8.0 g of N,N-dimethylformamide were added, and heated to 80°C. After the reaction proceeded at 80°C for 144 hours, the solution was cooled to room temperature to stop the reaction. A portion of the obtained reaction solution was extracted, and dried under reduced pressure at 50°C for 120 hours, which eventually obtained 7.7 g of a pale brown resin-like substance. This resin-like substance was subjected to ¹H-NMR measurement and elemental analysis, and was identified to be a polyether compound E having 1-methylpyrrolidinium halide groups in which the chloro group of all of the epichlorohydrin units and the bromo group of all of the bromomethyl groups at the polymerization-initiating end of the polyether compound A of the starting material were substituted with a 1-methylpyrrolidinium chloride group and a 1-methylpyrrolidinium bromide group, respectively. The obtained polyether compound E had a number average molecular weight (Mn) of 110,000.

### [Production Example 6]

### (Anion exchange of polyether compound E having 1-methylpyrrolidinium halide groups with lithium bis(trifluoromethanesulfonyl)imide)

To a glass reactor vessel equipped with a stirrer, 300 ml of distilled water in which 26.0 g of lithium bis(trifluoromethanesulfonyl)imide had been dissolved was added. Separately from this, 7.7 g of the polyether compound E having 1-methylpyrrolidinium halide groups obtained in Production Example 5 was dissolved in 100 ml of distilled water, and this was added dropwise into the glass reactor and allowed to react for 30 minutes at room temperature. After the reaction, the precipitated pale brown rubber-like substance was recovered and dissolved in acetone. The acetone solution was then added dropwise to 300 ml of distilled water, and an inorganic salt was removed by polymer coagulation. The rubber-like substance obtained by the coagulation was dried under reduced pressure at 50°C for 12 hours, which eventually obtained 18.0 g of a pale brown rubber-like substance. The obtained pale brown rubber-like substance was subjected to ¹H-NMR measurement and elemental analysis, and was identified to be a pyrrolidinium structure-containing polyether compound F having a bis(trifluoromethanesulfonyl)imide anion as a counter anion in which the chloride ion of the 1-methylpyrrolidinium chloride group in the repeating unit and the bromide ion of the 1-methylpyrrolidinium bromide group of the polymerization-initiating end of the polyether compound E having 1-methylpyrrolidinium halide groups obtained in Production Example 5 as the starting material were all substituted with a bis(trifluoromethanesulfonyl)imide anion. The obtained polyether compound F had a number average molecular weight (Mn) of 261,000.

### [Production Example 7]

### (Living anion polymerization of epichlorohydrin)

To a glass reactor vessel purged with argon and equipped with a stirrer, 3.22 g of tetranormalbutylammonium bromide and 100 ml of toluene were added and then cooled to 0°C. Next, 1.370 g of triethylaluminum dissolved in 10 ml of normal hexane was added to allow a reaction to proceed for 15 minutes to produce a catalyst composition. To the resultant catalyst composition, 35.0 g of epichlorohydrin was added to carry out a polymerization reaction at 0°C. After the polymerization reaction was initiated, the viscosity of the solution gradually increased. After the reaction proceeded for 12 hours, a small amount of water was poured into the polymerization reaction solution to stop the reaction. The resultant polymerization reaction solution was washed with 0.1 N of a hydrochloric acid aqueous solution to remove a catalyst residue and was further washed with ion-exchange water. After that, an organic phase was dried under reduced pressure at 50°C for 12 hours. As a result, an oil-like substance was obtained in a yield of 34.6 g. The obtained oil-like substance had a number average molecular weight (Mn) determined by GPC measurement of 3,500 and a molecular weight distribution (Mw/Mn) of 1.4. Further, ¹H-NMR measurement was performed on the obtained oil-like substance, from which it was confirmed that the oil-like substance had 37 repeating units (number of oxirane monomer units). Based on the above, the obtained oil-like substance was identified as polyether compound G composed of an epichlorohydrin unit having a bromomethyl group at a polymerization-initiating end and a hydroxy group at a polymerization-terminating end.

### [Production Example 8]

### (Quaternization of epichlorohydrin unit in polyether compound G with 1-methylimidazole)

To a glass reactor vessel purged with argon and equipped with a stirrer, 5.0 g of polyether compound G obtained in Production Example 7, 12.1 g of 1-methylimidazole, and 10.0 g of acetonitrile were added, and heated to 80°C. After the reaction proceeded at 80°C for 48 hours, the solution was cooled to room temperature to stop the reaction. The resultant mixture was washed with an equal weight mixed solution of toluene/methanol/water, and then an organic phase containing 1-methylimidazole and toluene was removed and an aqueous phase was dried under reduced pressure at 50°C for 12 hours, which eventually obtained 9.4 g of a light reddish solid. This solid was subjected to ¹H-NMR measurement and elemental analysis, and was identified to be a polyether compound H having 1-methylimidazolium halide groups in which the chloro group in all of the repeating units and the bromo group of all of the bromomethyl groups at the polymerization-initiating end of the polyether compound G (polyepichlorohydrin) obtained in Production Example 7 of the starting material were substituted with a 1-methylimidazolium chloride group and a 1-methylimidazolium bromide group, respectively. The obtained polyether compound H had a number average molecular weight (Mn) of 6,500.

### [Production Example 9]

### (Anion exchange of polyether compound H having 1-methylimidazolium halide groups with lithium bis(trifluoromethanesulfonyl)imide)

To a glass reactor vessel equipped with a stirrer, 2.5 g of polyether compound H having 1-methylimidazolium halide groups obtained in Production Example 8, 4.1 g of lithium bis(trifluoromethanesulfonyl)imide, and 20 mL of ion-exchange water were added. After the reaction proceeded at room temperature for 30 minutes, the solution was dried under reduced pressure at 50°C for 12 hours. The resultant solid-liquid mixture was washed with water to remove an inorganic salt, and then a liquid phase was extracted with toluene. The resultant toluene solution was dried under reduced pressure at 50°C for 12 hours, which eventually obtained 5.7 g of a viscous liquid-form substance. The obtained viscous liquid-form substance was subjected to ¹H-NMR spectrum measurement and elemental analysis, and was identified to be an imidazolium structure-containing polyether compound I having a bis(trifluoromethanesulfonyl)imide anion as a counter anion in which the chloride ion and the bromide ion of the polyether compound H having 1-methylimidazolium halide groups obtained in Production Example 8 as the starting material were all substituted with a bis (trifluoromethanesulfonyl) imide anion. The obtained polyether compound I had a number average molecular weight (Mn) of 15,500.

### [Production Example 10]

### (Quaternization of epichlorohydrin unit in polyether compound G with 1-methylimidazole)

To a glass reactor vessel purged with argon and equipped with a stirrer, 5.0 g of polyether compound G obtained in Production Example 7, 6.1 g of 1-methylimidazole, and 10.0 g of acetonitrile were added, and heated to 80°C. After the reaction proceeded at 80°C for 48 hours, the solution was cooled to room temperature to stop the reaction. The resultant mixture was washed with an equal weight mixed solution of toluene/methanol/water, and then an organic phase containing 1-methylimidazole and toluene was removed and an aqueous phase was dried under reduced pressure at 50°C for 12 hours, which eventually obtained 6.4 g of a light reddish solid. This solid was subjected to ¹H-NMR measurement and elemental analysis, from which the solid was identified to be a polyether compound J having 1-methylimidazolium halide groups in which a portion (30 mol%) of the chloro groups in the repeating units and the bromo group of the bromomethyl groups at the polymerization-initiating end of the polyether compound G (polyepichlorohydrin) of the starting material were substituted with a 1-methylimidazolium chloride group and a 1-methylimidazolium bromide group, respectively. The obtained polyether compound J had a number average molecular weight (Mn) of 4,300. Further, the content rate of the oxirane monomer unit having a 1-methylimidazolium halide group was measured to be 30 mol%, and the content rate of the oxirane monomer unit having chloromethyl group was 70 mol%.

### [Production Example 11]

### (Anion exchange of polyether compound J having 1-methylimidazolium halide groups with lithium bis(trifluoromethanesulfonyl)imide)

To a glass reactor vessel equipped with a stirrer, 2.5 g of polyether compound J obtained in Production Example 10, 4.1 g of lithium bis(trifluoromethanesulfonyl)imide, and 20 mL of ion-exchange water were added. After the reaction proceeded at room temperature for 30 minutes, the solution was dried under reduced pressure at 50°C for 12 hours. The resultant solid-liquid mixture was washed with water to remove an inorganic salt, and then a liquid phase was extracted with toluene. The resultant toluene solution was dried under reduced pressure at 50°C for 12 hours, which eventually obtained 4.2 g of a viscous liquid-form substance. The obtained viscous liquid-form substance was subjected to ¹H-NMR spectrum measurement and elemental analysis, and was identified to be an imidazolium structure-containing polyether compound K having a bis(trifluoromethanesulfonyl)imide anion as a counter anion in which the chloride ion and the bromide ion of the polyether compound J having 1-methylimidazolium halide groups obtained in Production Example 10 as the starting material were all substituted with a bis(trifluoromethanesulfonyl)imide anion. The obtained polyether compound K had a number average molecular weight (Mn) of 7,300. Further, the content rate of the oxirane monomer unit having a 1-methylimidazolium bis(trifluoromethanesulfonyl)imide group was measured to be 30 mol%, and the content rate of the oxirane monomer unit having chloromethyl group was 70 mol%.

### [Example 1]

Mixed in acetone were 100 parts of 1-ethyl-3-methylimidazolium bis(trifluoromethanesulfonyl)imide (viscosity at 25°C: 34 mPa·s, molecular weight: 391.31) as an ionic liquid and 25 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound C was observed between -80°C and 100°C, based on which it could be confirmed that an ionic composition having no melting point and no glass transition point was obtained.

### [Example 2]

Mixed in acetone were 100 parts of 1-ethyl-3-methylimidazolium bis(trifluoromethanesulfonyl)imide as an ionic liquid, 25 parts of imidazolium structure-containing polyether compound C having a bis(trifluoromethanesulfonyl)imide anion as a counter anion obtained in Production Example 3, and 0.5 parts of 2-(dimethylamino)-2-[(4-methylphenyl)methyl]-1-[4-(4-morpholinyl)phenyl]-1-butanone (trade name "Irgcure (R) 379EG", manufactured by BASF) as a cross-linking agent. Next, the solvent was distilled off to obtain a transparent ionic composition. The obtained ionic composition was irradiated with UV rays, turning the liquid-form ionic composition into a gel-like cross-linked product. Then, the obtained cross-linked product was subjected to DSC measurement. In this measurement, no melting point derived from 1-ethyl-3-methylimidazolium bis(trifluoromethanesulfonyl)imide was observed and no glass transition point derived from the polyether compound C was observed between -80°C and 100°C, based on which it could be confirmed that a cross-linked product having no melting point and no glass transition point was obtained. Further, the above-mentioned shape retention test was carried out on the obtained cross-linked product. In this test, no bleeding of the ionic liquid by its own weight was observed even after leaving to stand for 24 hours in a 23°C, 40% humidity environment, and shape retention was excellent.

### [Example 3]

Mixed in acetone were 100 parts of 1-ethyl-3-methylimidazolium bis(trifluoromethanesulfonyl)imide as an ionic liquid and 25 parts of imidazolium structure-containing polyether compound D having a hexafluorophosphate anion as a counter anion obtained in Production Example 4. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound D was observed between -80°C and 100°C, based on which it could be confirmed that an ionic composition having no melting point and no glass transition point was obtained.

### [Example 4]

Mixed in acetone were 100 parts of 1-ethyl-3-methylimidazolium bis(trifluoromethanesulfonyl)imide as an ionic liquid and 25 parts of pyrrolidinium structure-containing polyether compound F having a bis(trifluoromethanesulfonyl)imide anion as a counter anion obtained in Production Example 6. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound F was observed between -80°C and 100°C, based on which it could be confirmed that an ionic composition having no melting point and no glass transition point was obtained.

### [Example 5]

Mixed in acetone were 100 parts of 1-ethyl-3-methylimidazolium tetrafluoroborate (viscosity at 25°C: 38 mPa·s, molecular weight: 197.97) as an ionic liquid and 25 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from 1-ethyl-3-methylimidazolium tetrafluoroborate was observed and no glass transition point derived from the polyether compound C was observed between -80°C and 100°C, based on which it could be confirmed that an ionic composition having no melting point and no glass transition point was obtained.

### [Example 6]

Mixed in acetone were 100 parts of 1-butyl-1-methylpyrrolidinium bis(trifluoromethanesulfonyl)imide (viscosity at 25°C: 71 mPa·s, molecular weight: 422.41) as an ionic liquid and 25 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from 1-butyl-1-methylpyrrolidinium bis (trifluoromethanesulfonyl) imide was observed and no glass transition point derived from the polyether compound C was observed between -80°C and 100°C, based on which it could be confirmed that an ionic composition having no melting point and no glass transition point was obtained.

### [Example 7]

Mixed in acetone were 100 parts of N-butylpyridinium bis(trifluoromethanesulfonyl)imide (viscosity at 25°C: 55 mPa·s, molecular weight: 416.36) as an ionic liquid and 25 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from N-butylpyridinium bis(trifluoromethanesulfonyl)imide was observed and no glass transition point derived from the polyether compound C was observed between -80°C and 100°C, based on which it could be confirmed that an ionic composition having no melting point and no glass transition point was obtained.

### [Example 8]

Mixed in acetone were 100 parts of 1-ethyl-3-methylimidazolium bis(trifluoromethanesulfonyl)imide as an ionic liquid and 5 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound C was observed between -80°C and 100°C, based on which it could be confirmed that an ionic composition having no melting point and no glass transition point was obtained.

### [Example 9]

Mixed in acetone were 100 parts of 1-ethyl-3-methylimidazolium bis(trifluoromethanesulfonyl)imide as an ionic liquid and 10 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound C was observed between -80°C and 100°C, based on which it could be confirmed that an ionic composition having no melting point and no glass transition point was obtained.

### [Example 10]

Mixed in acetone were 100 parts of 1-ethyl-3-methylimidazolium bis(trifluoromethanesulfonyl)imide as an ionic liquid and 100 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound C was observed between -80°C and 100°C, based on which it could be confirmed that an ionic composition having no melting point and no glass transition point was obtained.

### [Example 11]

Mixed in acetone were 100 parts of 1-ethyl-3-methylimidazolium bis(trifluoromethanesulfonyl)imide as an ionic liquid and 400 parts of imidazolium structure-containing polyether compound C having a bis(trifluoromethanesulfonyl)imide anion as a counter anion obtained in Production Example 3. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound C was observed between -80°C and 100°C, based on which it could be confirmed that an ionic composition having no melting point and no glass transition point was obtained.

### [Example 12]

Mixed in acetone were 100 parts of 1-ethyl-3-methylimidazolium bis(trifluoromethanesulfonyl)imide as an ionic liquid and 25 parts of imidazolium structure-containing polyether compound I having a bis(trifluoromethanesulfonyl)imide anion as a counter anion obtained in Production Example 9. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound I was observed between -80°C and 100°C, based on which it could be confirmed that an ionic composition having no melting point and no glass transition point was obtained.

### [Example 13]

Mixed in acetone were 100 parts of 1-ethyl-3-methylimidazolium bis(trifluoromethanesulfonyl)imide as an ionic liquid and 100 parts of imidazolium structure-containing polyether compound K having a bis (trifluoromethanesulfonyl) imide anion as a counter anion obtained in Production Example 11. Next, the solvent was distilled off to obtain a transparent ionic composition. Then, the obtained ionic composition was subjected to DSC measurement. In this measurement, no melting point derived from 1-ethyl-3-methylimidazolium bis(trifluoromethanesulfonyl)imide was observed and no glass transition point derived from the polyether compound K was observed between -80°C and 100°C, based on which it could be confirmed that an ionic composition having no melting point and no glass transition point was obtained.

### [Example 14]

Mixed in acetone were 100 parts of 1-butyl-3-methylimidazolium bis(trifluoromethanesulfonyl)imide (viscosity at 25°C: 51 mPa·s, molecular weight: 419.36) as an ionic liquid, 25 parts of imidazolium structure-containing polyether compound C having a bis(trifluoromethanesulfonyl)imide anion as a counter anion obtained in Production Example 3, and 0.5 parts of 2-(dimethylamino)-2-[(4-methylphenyl)methyl]-1-[4-(4-morpholinyl)phenyl]-1-butanone as a cross-linking agent. Next, the solvent was distilled off to obtain a transparent ionic composition. The obtained ionic composition was irradiated with UV rays, turning the liquid-form ionic composition into a gel-like cross-linked product. Then, the obtained cross-linked product was subjected to DSC measurement. In this measurement, no melting point derived from 1-butyl-3-methylimidazolium bis(trifluoromethanesulfonyl)imide was observed and no glass transition point derived from the polyether compound C was observed between -80°C and 100°C, based on which it could be confirmed that a cross-linked product having no melting point and no glass transition point was obtained. Further, the above-mentioned shape retention test was carried out on the obtained cross-linked product. In this test, no bleeding of the ionic liquid by its own weight was observed even after leaving to stand for 24 hours in a 23°C, 40% humidity environment, and shape retention was excellent.

### [Example 15]

Mixed in acetone were 100 parts of 1-ethyl-3-methylimidazolium bis(trifluoromethanesulfonyl)imide as an ionic liquid, 25 parts of imidazolium structure-containing polyether compound B having 1-methylimidazolium halide groups obtained in Production Example 2, and 0.5 parts of 2-(dimethylamino)-2-[(4-methylphenyl)methyl]-1-[4-(4-morpholinyl)phenyl]-1-butanone as a cross-linking agent. Next, the solvent was distilled off to obtain a transparent ionic composition. The obtained ionic composition was irradiated with UV rays, turning the liquid-form ionic composition into a gel-like cross-linked product. Then, the obtained cross-linked product was subjected to DSC measurement. In this measurement, no melting point derived from 1-ethyl-3-methylimidazolium bis(trifluoromethanesulfonyl)imide was observed and no glass transition point derived from the polyether compound B was observed between -80°C and 100°C, based on which it could be confirmed that a cross-linked product having no melting point and no glass transition point was obtained. Further, the above-mentioned shape retention test was carried out on the obtained cross-linked product. In this test, no bleeding of the ionic liquid by its own weight was observed even after leaving to stand for 24 hours in a 23°C, 40% humidity environment, and shape retention was excellent.

### [Comparative Example 1]

DSC measurement was carried out between -80°C and 100°C on 1-ethyl-3-methylimidazolium bis(trifluoromethanesulfonyl)imide as an ionic liquid as is without mixing with a polyether compound. In the DSC measurement, a melting point derived from 1-ethyl-3-methylimidazolium bis(trifluoromethanesulfonyl)imide was observed at -16.5°C.

### [Comparative Example 2]

DSC measurement was carried out between -80°C and 100°C on 1-ethyl-3-methylimidazolium tetrafluoroborate as an ionic liquid as is without mixing with a polyether compound. In the DSC measurement, a melting point derived from 1-ethyl-3-methylimidazolium tetrafluoroborate was observed at 14.1°C.

### [Comparative Example 3]

DSC measurement was carried out between -80°C and 100°C on 1-butyl-1-methylpyrrolidinium bis(trifluoromethanesulfonyl)imide as an ionic liquid as is without mixing with a polyether compound. In the DSC measurement, a melting point derived from 1-butyl-1-methylpyrrolidinium bis(trifluoromethanesulfonyl)imide was observed at -7.5°C.

### [Comparative Example 4]

DSC measurement was carried out between -80°C and 100°C on N-butylpyridinium bis(trifluoromethanesulfonyl)imide as an ionic liquid as is without mixing with a polyether compound. In the DSC measurement, a melting point derived from N-butylpyridinium bis(trifluoromethanesulfonyl)imide was observed at -16.0°C.

### [Comparative Example 5]

DSC measurement was carried out between -80°C and 100°C on imidazolium structure-containing polyether compound C having a bis(trifluoromethanesulfonyl)imide anion as a counter anion obtained in Production Example 3 as is without mixing with an ionic liquid. In the DSC measurement, a glass transition point derived from polyether compound C was observed at -11.3°C.

### [Comparative Example 6]

DSC measurement was carried out between -80°C and 100°C on imidazolium structure-containing polyether compound D having a hexafluorophosphate anion as a counter anion obtained in Production Example 4 as is without mixing with an ionic liquid. In the DSC measurement, a glass transition point derived from polyether compound D was observed at 63.1°C.

### [Comparative Example 7]

DSC measurement was carried out between -80°C and 100°C on pyrrolidinium structure-containing polyether compound F having a bis(trifluoromethanesulfonyl)imide anion as a counter anion obtained in Production Example 6 as is without mixing with an ionic liquid. In the DSC measurement, a glass transition point derived from polyether compound F was observed at -10.4°C.

### [Comparative Example 8]

DSC measurement was carried out between -80°C and 100°C on imidazolium structure-containing polyether compound I having a bis(trifluoromethanesulfonyl)imide anion as a counter anion obtained in Production Example 9 as is without mixing with an ionic liquid. In the DSC measurement, a glass transition point derived from polyether compound I was observed at -12.7°C.

### [Comparative Example 9]

DSC measurement was carried out between -80°C and 100°C on imidazolium structure-containing polyether compound K having a bis(trifluoromethanesulfonyl)imide anion as a counter anion obtained in Production Example 11 as is without mixing with an ionic liquid. In the DSC measurement, a glass transition point derived from polyether compound K was observed at -33.5°C.

### [Comparative Example 10]

DSC measurement was carried out between -80°C and 100°C on 1-butyl-3-methylimidazolium bis(trifluoromethanesulfonyl)imide as an ionic liquid as is without mixing with a polyether compound. In the DSC measurement, a melting point derived from 1-butyl-3-methylimidazolium bis(trifluoromethanesulfonyl) was observed at -1.1°C.

### [Comparative Example 11]

DSC measurement was carried out between -80°C and 100°C on imidazolium structure-containing polyether compound B having 1-methylimidazolium halide groups obtained in Production Example 2 as is without mixing with an ionic liquid. In the DSC measurement, a glass transition point derived from polyether compound B was observed at 90°C.

The results of Examples 1 to 15 and Comparative Examples 1 to 11 are collectively shown in Table 1.

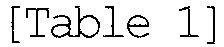

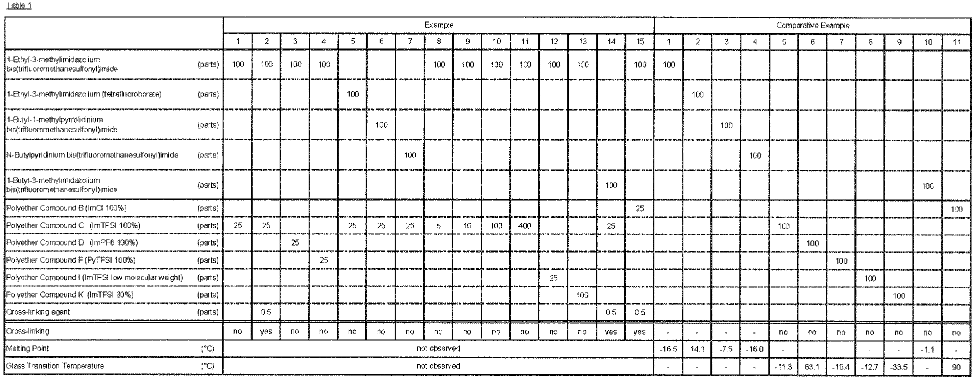

As shown in Table 1, for the ionic compositions comprising an ionic liquid and a polyether compound having a cationic group, and the cross-linked products obtained using those ionic compositions, between - 80°C and 100°C, no melting point derived from an ionic liquid was observed, and no glass transition point derived from the polyether compound having a cationic group was observed either. Moreover, those ionic compositions and cross-linked products were also both confirmed as having excellent low-temperature properties (even in the case of low temperature, there was no significant change in properties) (Examples 1 to 15).

## Claims

1. An ionic composition comprising an ionic liquid and a polyether compound having a cationic group, wherein
the polyether compound having a cationic group is composed of a monomer unit represented by the following general formula (1),
the ionic liquid is an organic salt compound composed of a cation and an anion,
the ionic liquid has a molecular weight of 100 to 700, and
a content of the polyether compound having a cationic group is 3 to 400 parts by weight with respect to 100 parts by weight of the ionic liquid, 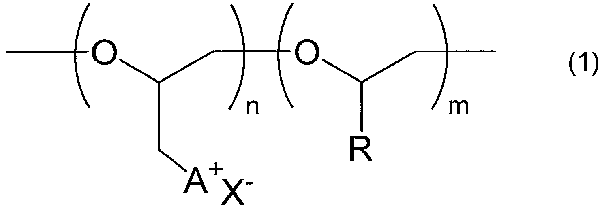
wherein A⁺ represents a cationic group or a cationic group-containing group, X⁻ represents any counter anion, R represents a non-ionic group, "n" is an integer of 1 or more, and "m" is an integer of 0 or more.

2. The ionic composition according to claim 1, wherein the cationic group is a cationic group in which a nitrogen atom forms an onium cation structure.

3. The ionic composition according to claim 2, wherein the cationic group is a cationic group in which a nitrogen atom in a nitrogen atom-containing aromatic heterocycle forms an onium cation structure.

4. The ionic composition according to any of claims 1 to **3,** wherein the polyether compound having a cationic group has a number average molecular weight (Mn) of 750 to 2,000,000, wherein
the number average molecular weight (Mn) is determined as described in the specification.

5. The ionic composition according to any of claims 1 to 4, wherein the ionic liquid has an ion containing a cationic nitrogen atom as a cation.

6. The ionic composition according to any of claims 1 to **5,** wherein the polyether compound having a cationic group further has a cross-linkable group.

7. A cross-linkable composition comprising the ionic composition according to claim 6 and a cross-linking agent.

8. A cross-linked product obtained by cross-linking the cross-linkable composition according to claim 7.

## Patentansprüche

1. Ionische Zusammensetzung, umfassend eine ionische Flüssigkeit und eine Polyetherverbindung mit einer kationischen Gruppe, wobei
die Polyetherverbindung mit einer kationischen Gruppe aus einer Monomereinheit besteht, die durch die folgende allgemeine Formel (1) dargestellt wird,
die ionische Flüssigkeit eine organische Salzverbindung ist, die aus einem Kation und einem Anion besteht,
die ionische Flüssigkeit ein Molekulargewicht von 100 bis 700 hat, und
ein Gehalt der Polyetherverbindung mit einer kationischen Gruppe 3 bis 400 Gewichtsteile, bezogen auf 100 Gewichtsteile der ionischen Flüssigkeit, beträgt, 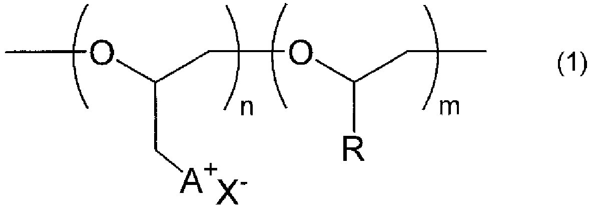
worin A⁺ eine kationische Gruppe oder eine eine kationische Gruppe enthaltende Gruppe darstellt, X⁻ ein beliebiges Gegenanion darstellt, R eine nichtionische Gruppe darstellt, "n" eine ganze Zahl von 1 oder mehr ist und "m" eine ganze Zahl von 0 oder mehr ist.

2. Ionische Zusammensetzung nach Anspruch 1, wobei die kationische Gruppe eine kationische Gruppe ist, in der ein Stickstoffatom eine Oniumkationstruktur bildet.

3. Ionische Zusammensetzung nach Anspruch 2, wobei die kationische Gruppe eine kationische Gruppe ist, in der ein Stickstoffatom in einem stickstoffhaltigen aromatischen Heterocyclus eine Oniumkationstruktur bildet.

4. Ionische Zusammensetzung nach einem der Ansprüche 1 bis 3, wobei die Polyetherverbindung mit einer kationischen Gruppe ein zahlenmittleres des Molekulargewichts (Mn) von 750 bis 2.000.000 aufweist, wobei
das zahlenmittlere Molekulargewicht (Mn) wie in der Beschreibung beschrieben bestimmt wird.

5. Ionische Zusammensetzung nach einem der Ansprüche 1 bis 4, wobei die ionische Flüssigkeit ein Ion aufweist, das ein kationisches Stickstoffatom als Kation enthält.

6. Ionische Zusammensetzung nach einem der Ansprüche 1 bis 5, wobei die Polyetherverbindung mit einer kationischen Gruppe außerdem eine vernetzbare Gruppe aufweist.

7. Vernetzbare Zusammensetzung, umfassend die ionische Zusammensetzung nach Anspruch 6 und ein Vernetzungsmittel.

8. Vernetztes Produkt, erhalten durch Vernetzen der vernetzbaren Zusammensetzung nach Anspruch 7.

## Revendications

1. Composition ionique comprenant un liquide ionique et un composé de polyéther ayant un groupe cationique, dans laquelle
le composé polyéther ayant un groupe cationique est composé d'une unité monomère représentée par la formule générale suivante (1),
le liquide ionique est un composé salin organique composé d'un cation et d'un anion,
le liquide ionique a un poids moléculaire compris entre 100 et 700, et
la teneur en composé polyéther ayant un groupe cationique est de 3 à 400 parties en poids par rapport à 100 parties en poids du liquide ionique, 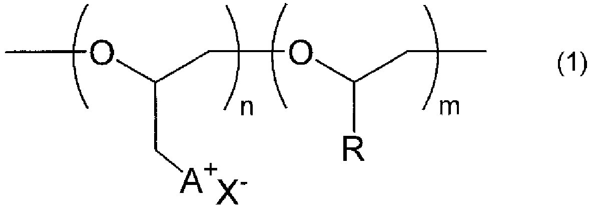
où A⁺ représente un groupe cationique ou un groupe contenant un groupe cationique, X⁻ représente un contre-anion quelconque, R représente un groupe non ionique, « n » est un nombre entier de 1 ou plus, et « m » est un nombre entier de 0 ou plus.

2. Composition ionique selon la revendication 1, dans laquelle le groupe cationique est un groupe cationique dans lequel un atome d'azote forme une structure de cation onium.

3. Composition ionique selon la revendication 2, dans laquelle le groupe cationique est un groupe cationique dans lequel un atome d'azote dans un hétérocycle aromatique contenant un atome d'azote forme une structure de cation onium.

4. Composition ionique selon l'une des revendications 1 à 3, dans laquelle le composé polyéther ayant un groupe cationique a un poids moléculaire moyen en nombre (Mn) de 750 à 2 000 000, dans laquelle
le poids moléculaire moyen en nombre (Mn) est déterminé comme décrit dans la description.

5. Composition ionique selon l'une des revendications 1 à 4, dans laquelle le liquide ionique a un ion contenant un atome d'azote cationique en tant que cation.

6. Composition ionique selon l'une des revendications 1 à 5, dans laquelle le composé polyéther ayant un groupe cationique possède en outre un groupe réticulable.

7. Composition réticulable comprenant la composition ionique selon la revendication 6 et un agent réticulant.

8. Produit réticulé obtenu par réticulation de la composition réticulable selon la revendication 7.
